# FASCICULE DE BREVET EUROPEEN

(11) **EP 1 922 967 B1**
(45) Date de publication et mention de la délivrance du brevet: **23.09.2009**
(21) Numéro de dépôt: 07356148.2
(22) Date de dépôt: 22.10.2007
(51) Int. Cl.: A47J 43/06, A47J 43/07

(54) **Appareil électroménager de préparation culinaire chauffant, comportant un récipient de cuisson intermédiaire**
Selsbstheizeindes Haushaltsgerät zur Essenszubereitung, das einen Zwischen-Kochbehälter umfasst
Heating kitchen appliance comprising an intermediate cooking container

(30) Priorité: 17.11.2006 FR 0610056
(43) Date de publication de la demande: 21.05.2008
(73) Titulaire: SEB S.A., 69130 Ecully (FR)
(72) Inventeur: Astegno, Jean Paul, 64420 Espoey (FR); Charles, Patrick, 65290 Louey (FR); Lacourpaille, Gérard, 65380 Ossun (FR)
(74) Mandataire: Kiehl, Hubert

(56) Documents cités:
- WO-A-02/21986
- DE-C1- 3 718 161
- US-A- 4 702 162
- US-A- 5 156 084
- US-A- 5 768 978

## Description

La présente invention concerne le domaine technique des appareils électroménagers de préparation culinaire chauffants, comportant un outil de travail rotatif disposé dans une cuve prévue pour recevoir les aliments.

L'utilisation d'une cuve présentant un fond et une cheminée s'élevant à partir du fond permet de simplifier la réalisation des moyens d'entraînement de l'outil de travail rotatif.

Le document DE 3 718 161 C1 montre un appareil électroménager de ce type.

Le but de la présente invention est d'augmenter les possibilités d'utilisation d'un appareil électroménager de préparation culinaire du type précité, tout en conservant une construction économique.

Le but de l'invention est atteint avec un appareil électroménager de préparation culinaire comportant une cuve présentant un fond, un outil de travail rotatif agencé dans la cuve, un dispositif d'entraînement de l'outil de travail rotatif, et un couvercle, la cuve étant associée à des moyens de chauffe, du fait que la cuve présente une cheminée s'élevant à partir du fond, la cheminée comportant une ouverture supérieure, l'outil de travail rotatif agencé dans la cuve coiffant la cheminée, un récipient intermédiaire étant prévu pour être interposé entre le couvercle et la cuve lorsque l'outil de travail rotatif a été retiré de la cuve, le récipient intermédiaire comportant une protubérance prévue pour coiffer la cheminée. En d'autres termes, la cheminée est bouchée par le récipient intermédiaire remplaçant l'outil de travail rotatif. Cette disposition permet de transformer un appareil électroménager de préparation culinaire chauffant formant un cuiseur brasseur, dans lequel les aliments sont mélangés pendant la chauffe avec l'outil de travail rotatif, en un mijoteur vapeur ou en un cuiseur vapeur, dans lequel les aliments sont disposés dans le récipient intermédiaire, tout en conservant une construction simple pour la réalisation des moyens d'entraînement de l'outil de travail rotatif.

Avantageusement alors, la protubérance repose sur le sommet de la cheminée. Cette disposition évite le coincement du récipient intermédiaire.

Avantageusement encore, la cheminée est tronconique. Cette disposition permet d'envisager une cuve présentant une forme empilable, pour faciliter le transport.

Avantageusement encore, la protubérance est tronconique. Cette disposition permet d'envisager un récipient intermédiaire présentant une forme empilable, pour faciliter le transport.

Avantageusement encore, le récipient intermédiaire forme une passoire. Cette disposition permet la transformation de l'appareil en un cuiseur vapeur ou en un extracteur de jus. En alternative, la partie inférieure du récipient intermédiaire peut être dépourvue d'ouvertures, permettant ainsi la transformation de l'appareil en un mijoteur.

Avantageusement encore, le récipient intermédiaire comporte des ouvertures inférieures. Cette disposition permet l'écoulement dans la cuve de jus extraits par la vapeur de fruits crus placés dans le récipient intermédiaire.

Avantageusement encore le récipient intermédiaire comporte des ouvertures latérales extérieures. Cette disposition permet de faciliter le passage de la vapeur lors d'une extraction de jus.

Avantageusement encore le récipient intermédiaire comporte des ouvertures latérales intérieures ménagées sur une paroi latérale de la protubérance. Cette disposition permet de faciliter le retrait de la protubérance du récipient intermédiaire de la cheminée de la cuve, en évitant un effet d'adhérence entre la protubérance et la cheminée.

L'invention sera mieux comprise à l'étude d'un exemple de réalisation, pris à titre nullement limitatif, illustré dans les figures annexées, dans lesquelles :
- la figure 1 est une vue en éclaté d'un appareil électroménager de préparation culinaire selon l'invention,
- la figure 2 est une vue en perspective plongeante de l'appareil électroménager de préparation culinaire illustré à la figure 1, présentant une configuration comportant une cuve, un outil de travail rotatif et le couvercle précité,
- la figure 3 est une vue en coupe verticale de l'appareil électroménager de préparation culinaire représenté à la figure 2,
- la figure 4 est une vue en perspective plongeante de l'appareil électroménager de préparation culinaire illustré à la figure 1, présentant une configuration comportant une cuve, un récipient intermédiaire et le couvercle précité,
- la figure 5 est une vue en coupe verticale de l'appareil électroménager de préparation culinaire représenté à la figure 4,
- la figure 6 est une vue en perspective plongeante de l'appareil électroménager illustré à la figure 1, montrant le rangement de l'outil de travail rotatif dans le récipient intermédiaire.

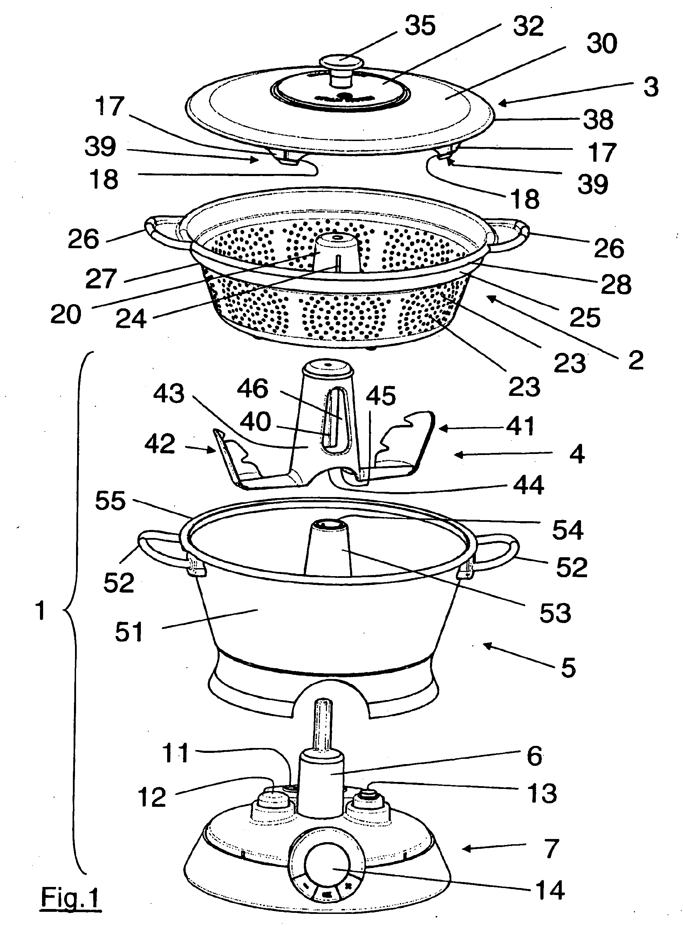

La figure 1 illustre un exemple de réalisation d'un appareil électroménager de préparation culinaire comportant une partie inférieure 1, un récipient intermédiaire 2, et un couvercle 3. La partie inférieure 1 comprend un outil de travail rotatif 4. La partie inférieure 1 comprend une cuve 5. L'outil de travail rotatif 4 est prévu pour être agencé dans la cuve 5. La partie inférieure 1 comprend un dispositif d'entraînement 6 de l'outil de travail rotatif 4. Le dispositif d'entraînement 6 est logé dans un socle 7. La cuve 5 repose sur le socle 7.

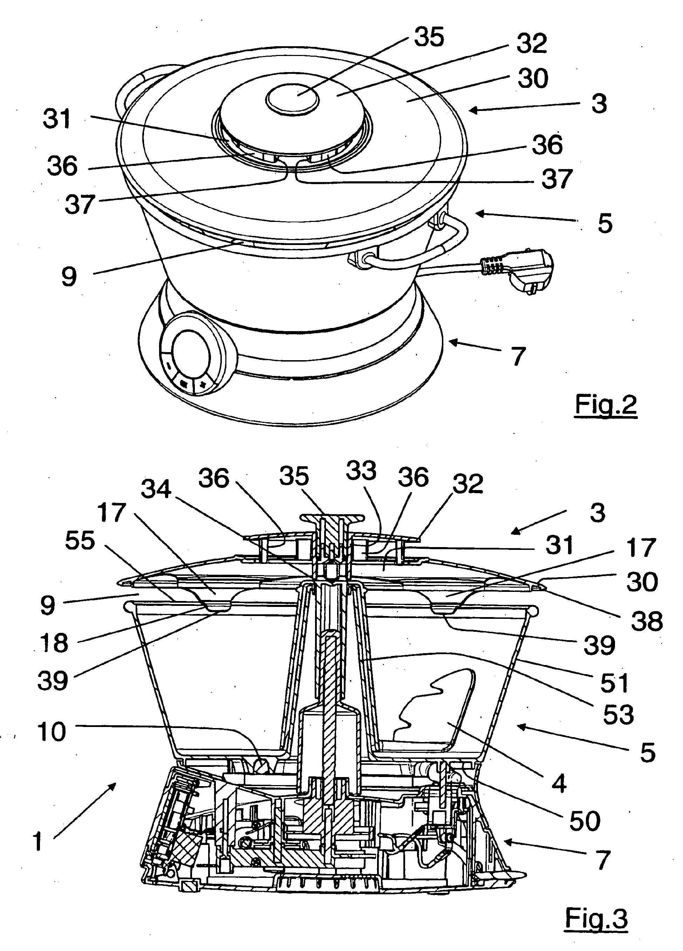

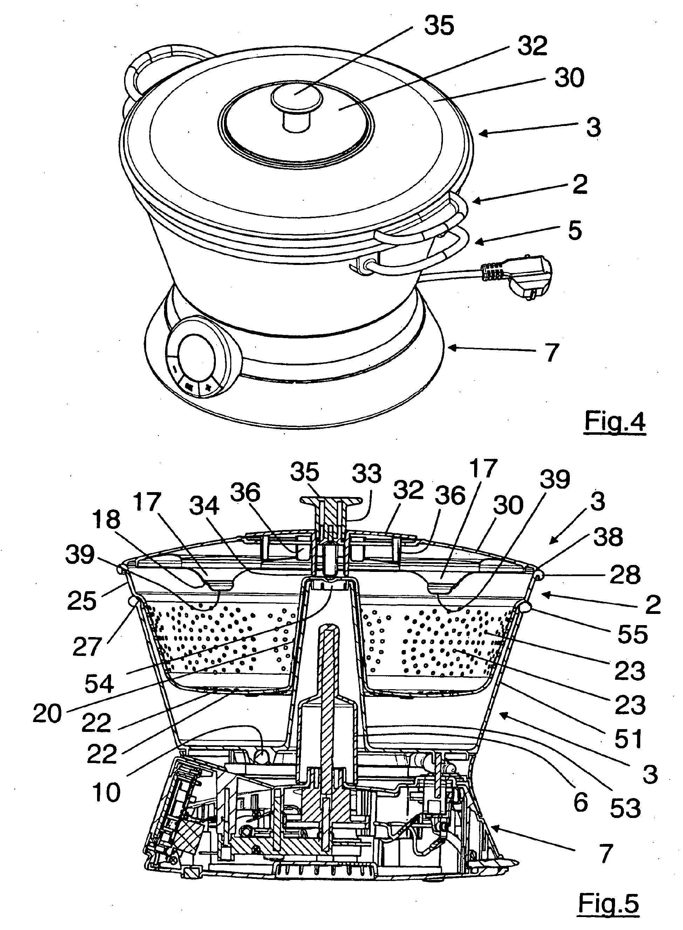

La cuve 5 présente un fond 50 et une paroi latérale 51. La paroi latérale 51 est avantageusement tronconique. La cuve 5 présente des organes de préhension 52 disposés sur la paroi latérale 51. La cuve 5 présente aussi une cheminée 53 s'élevant à partir du fond 50. Tel que bien visible sur les figures 1 et 3, la cheminée 53 présente une ouverture supérieure. La cheminée 53 est avantageusement tronconique. Un palier 54 est agencé en partie supérieure de la cheminée 53. Le palier 54 permet de faciliter la rotation de l'outil de travail rotatif 4. Le palier 54 est avantageusement clipsé à l'intérieur du sommet de la cheminée 53, tel que bien visible sur la figure 5.

La cuve 5 est associée à des moyens de chauffe 10. Selon le mode de réalisation visible sur les figures 3 et 5, les moyens de chauffe 10 sont formés par un élément chauffant blindé disposé sous le fond 50 de la cuve 5.

Les moyens de chauffe 10 comportent des connecteurs coopérant avec des douilles d'alimentation électrique 11 agencées dans le socle 7. Le socle 7 comporte des moyens de sécurité thermique comportant un palpeur 12 et des moyens de régulation comportant un autre palpeur 13, ainsi que des moyens de commande 14 prévus pour piloter l'appareil.

Le couvercle 3 peut reposer sur la cuve 5, tel que représenté sur les figures 2 et 3. Dans cette configuration prévue notamment pour la réalisation de confitures, l'outil de travail rotatif 4 est agencé dans la cuve 5. Plus particulièrement, l'outil de travail rotatif 4 coiffe la cheminée 53, tel que montré sur la figure 3.

L'outil de travail rotatif 4 comporte un organe d'entraînement 40, un organe de travail 41, un autre organe de travail 42, et un moyeu 43. L'organe de travail 41 et l'autre organe de travail 42 sont issus du moyeu 43. Le moyeu 43 porte l'organe d'entraînement 40. Le moyeu 43 est tubulaire et présente deux échancrures inférieures 44, 45 opposées. Le moyeu 43 présente deux découpes latérales 46 permettant d'éviter le soulèvement de l'outil de travail rotatif 4 par les aliments, notamment par les aliments liquides.

Le récipient intermédiaire 2 est prévu pour reposer sur la cuve 5. Le récipient intermédiaire 2 est prévu pour être interposé entre le couvercle 3 et la cuve 5, tel que représenté aux figures 4 et 5. Dans cette configuration prévue notamment pour la réalisation de jus de fruits et/ou la cuisson vapeur, l'outil de travail rotatif 4 est retiré de la cuve 5. Le récipient intermédiaire 2 comporte une protubérance 20 prévue pour coiffer la cheminée 53 de la cuve 5.

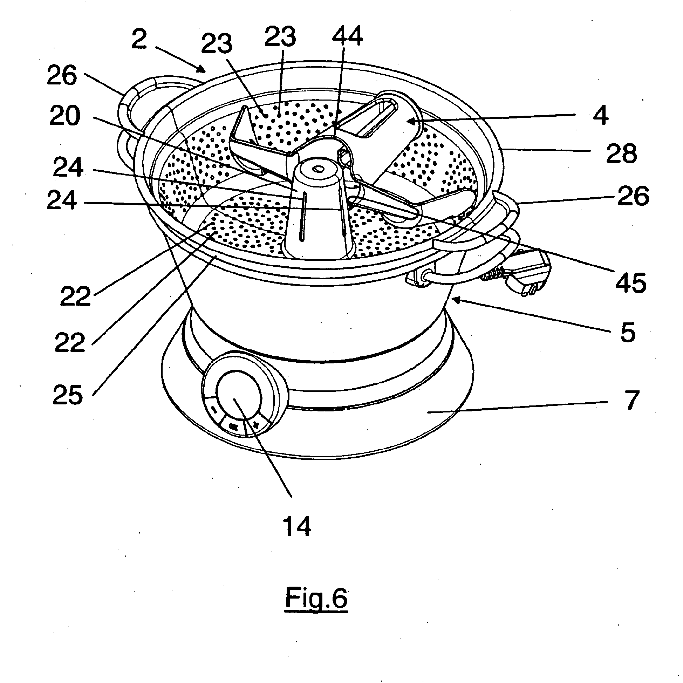

L'outil de travail rotatif 4 peut être rangé dans le récipient intermédiaire 2, tel que représenté à la figure 6. Les échancrures inférieures 44, 45 permettent de recevoir la protubérance 20 et de loger l'outil de travail rotatif 4 dans le récipient intermédiaire 2 puis de disposer le couvercle 3 sur le récipient intermédiaire 2.

La protubérance 20 est avantageusement tronconique. Tel que représenté sur la figure 5, la protubérance 20 repose sur le sommet de la cheminée 53.

Le récipient intermédiaire 2 forme une passoire. A cet effet, le récipient intermédiaire 2 comporte des ouvertures inférieures 22. Le récipient intermédiaire comporte également des ouvertures latérales extérieures 23. Le récipient intermédiaire comporte aussi des ouvertures latérales intérieures 24 ménagées sur une paroi latérale de la protubérance 20.

Dans l'exemple de réalisation illustré aux figures, les ouvertures inférieures 22, les ouvertures latérales extérieures 23 et les ouvertures latérales intérieures 24 sont formées par des perforations. A titre de variante, les ouvertures inférieures 22 et/ou les ouvertures latérales extérieures 23 et/ou les ouvertures latérales intérieures 24 pourraient être obtenues avec une ou des parois grillagées.

Le récipient intermédiaire 2 comporte une couronne supérieure 25 dépourvue de perforations. Des organes de préhension 26 sont issus de la couronne supérieure 25. La couronne supérieure 25 forme un décrochement 27 par rapport à la paroi extérieure présentant les ouvertures latérales extérieures 23. Le décrochement 27 est prévu pour reposer sur la cuve 5. A cet effet la cuve 5 présente un bord supérieur 55 recourbé. La couronne supérieure 25 du récipient intermédiaire 2 comporte un bord supérieur 28. Le diamètre du bord supérieur 28 du récipient intermédiaire 2 est supérieur au diamètre du bord supérieur 55 de la cuve 5.

Le couvercle 3 forme un couvercle à dégagement de vapeur contrôlé. Le couvercle 3 comporte un corps principal 30.

Le corps principal 30 présente une ouverture 31, mieux visible sur la figure 3. Le couvercle 3 comporte un corps secondaire 32 mobile entre une position abaissée, illustrée aux figures 1, 4 et 5, dans laquelle le corps secondaire 32 obture l'ouverture 31, et une position relevée, illustrée aux figures 2 et 3, dans laquelle le corps secondaire 32 est écarté de l'ouverture 31.

Le corps secondaire 32 est monté mobile en translation autour d'un noyau central 33 issu du corps principal 30, tel que visible sur les figures 3 et 5. Le corps secondaire 32 présente des moyens d'actionnement inférieurs 34 s'étendant en dessous du noyau central 33. Le couvercle 5 comporte un organe de préhension central 35 monté sur le noyau central 33. L'organe de préhension central 35 est par exemple vissé sur le noyau central 33. Le corps secondaire 32 présente une série de languettes inférieures 36 engagées dans des passages 37 du corps principal 30.

Le couvercle 3 comporte des moyens d'appui périphériques 38 agencés sous le corps principal 30. Les moyens d'appui périphériques 38 sont annulaires. Les moyens d'appui périphériques 38 sont prévus pour reposer sur le récipient intermédiaire 2. Plus particulièrement, les moyens d'appui périphériques 38 reposent sur le bord supérieur 28 du récipient intermédiaire 2, tel que visible sur la figure 5.

Le couvercle 3 comporte des moyens d'appui inférieurs 39 agencés sous le corps principal 30, les moyens d'appui inférieurs 39 ménageant un passage latéral 9 sous le corps principal 30 du couvercle 3. Les moyens d'appui périphériques 38 sont agencés sous le corps principal 30 à l'extérieur des moyens d'appui inférieurs 39. Plus particulièrement, les moyens d'appui inférieurs 39 sont formés par des languettes 17 présentant une zone d'appui 18. La zone d'appui 18 est prévue pour reposer sur le bord supérieur 55 de la cuve 5, tel que visible sur la figure 3. Le passage latéral 9 est annulaire. Le couvercle 3 repose sur la cuve 5 par l'intermédiaire des languettes 17 issues du corps principal 30.

Tel que visible sur les figures 2 et 3, les moyens d'appui inférieurs 39 reposant sur la cuve 5 ménagent le passage latéral 9 entre la cuve 5 et le corps principal 30 du couvercle 3. Le corps secondaire 32 occupe la position relevée lorsque le couvercle 3 repose sur la cuve 5.

Tel que visible sur les figures 4 et 5, les moyens d'appui inférieurs 39 s'étendent dans le récipient intermédiaire 2 lorsque les moyens d'appui périphériques 38 reposent sur le récipient intermédiaire 2. Le corps secondaire 32 occupe la position abaissée lorsque le couvercle 3 repose sur le récipient intermédiaire 2.

La présente invention permet d'obtenir un appareil électroménager de préparation culinaire, présentant deux configurations d'utilisation.

En configuration cuiseur brasseur illustrée aux figures 2 et 3, l'outil de travail rotatif 4 est en place dans la cuve 5, et le récipient de travail intermédiaire 2 n'est pas utilisé. La cheminée 53 de la cuve 5 permet l'entraînement de l'outil de travail rotatif 4 pour une utilisation comme cuiseur brasseur.

En configuration cuiseur vapeur illustrée aux figures 4 et 5, le récipient de travail intermédiaire 2 est disposé entre la cuve 5 et le couvercle 3, et l'outil de travail rotatif 4 n'est pas utilisé. La cheminée 53 de la cuve 5 est obturée par la protubérance 20 du réceptacle intermédiaire lorsque le réceptacle intermédiaire 2 est en place dans la cuve 5. Le socle 7 contenant les parties électriques et les moyens d'entraînement est ainsi protégé de la vapeur produite dans la cuve 5. La configuration cuiseur vapeur peut aussi servir à l'extraction de jus dans la cuve 5.

A titre de variante, le récipient intermédiaire 2 pourrait être dépourvu d'ouvertures. A titre de variante alternative, la partie inférieure du récipient intermédiaire pourrait être dépourvue d'ouvertures. Ces variantes permettent d'obtenir un appareil présentant une configuration mijoteur lorsque le récipient de travail intermédiaire 2 est disposé entre la cuve 5 et le couvercle 3, l'outil de travail rotatif 4 n'étant pas utilisé. La vapeur produite dans la cuve 5 vient chauffer le récipient intermédiaire 2 et son contenu. Les jus restent dans le récipient intermédiaire 2 Si désiré, des ouvertures extérieures peuvent être prévues pour permettre à la vapeur de s'échapper de la cuve sans pénétrer dans le récipient intermédiaire 2. Les ouvertures extérieures peuvent être ménagées dans la paroi de la cuve 5, entre le bord supérieur de la cuve 5 et le récipient intermédiaire 2, voire dans une paroi extérieure issue du récipient intermédiaire 2.

A titre de variante, l'appareil pourrait comporter un élément prévu pour supporter les aliments à cuire à la vapeur agencé dans le récipient intermédiaire 2 et/ou au-dessus du récipient intermédiaire. L'élément prévu pour supporter les aliments à cuire à la vapeur peut notamment être un support à fond perforé, un récipient à fond perforé, une passoire, ou un support ménageant un passage avec la paroi interne du récipient intermédiaire 2, ce support présentant alors de préférence une face supérieure convexe permettant l'écoulement des jus vers ledit passage. Si désiré, ledit élément prévu pour supporter les aliments à cuire à la vapeur peut s'étendre plus haut que le bord supérieur du récipient intermédiaire 2. Le couvercle 3 peut reposer alors sur ledit élément. La partie inférieure du récipient intermédiaire 2 utilisé avec ledit élément prévu pour supporter les aliments à cuire à la vapeur est de préférence dépourvue d'ouvertures. Le récipient intermédiaire 2 peut ainsi servir de récipient récupérateur de jus. Alors, en configuration extracteur de jus ou cuiseur vapeur, les aliments sont disposés dans ledit élément prévu pour supporter les aliments à cuire à la vapeur, et les jus sont recueillis dans le récipient intermédiaire 2.

A titre de variante, les moyens de chauffe 10 associés à la cuve 5 ne sont pas nécessairement fixés à la cuve. Les moyens de chauffe peuvent par exemple être montés sur le socle 7.

La présente invention n'est nullement limitée à l'exemple de réalisation décrit, mais englobe de nombreuses modifications dans le cadre des revendications.

## Revendications

1. Appareil électroménager de préparation culinaire, comportant une cuve (5) présentant un fond (50), un outil de travail rotatif (4) agencé dans la cuve (5), un dispositif d'entraînement (6) de l'outil de travail rotatif (4), et un couvercle (3), la cuve (5) étant associée à des moyens de chauffe (10), **caractérisé en ce que** la cuve (5) présente une cheminée (53) s'élevant à partir du fond (50), la cheminée (53) comportant une ouverture supérieure, l'outil de travail rotatif (4) agencé dans la cuve (5) coiffant la cheminée (53), un récipient intermédiaire (2) étant prévu pour être interposé entre le couvercle (3) et la cuve (5) lorsque l'outil de travail rotatif (4) a été retiré de la cuve (5), le récipient intermédiaire (2) comportant une protubérance (20) prévue pour coiffer la cheminée (53).

2. Appareil électroménager de préparation culinaire selon la revendication 1, **caractérisé en ce que** la protubérance (20) repose sur le sommet de la cheminée (53).

3. Appareil électroménager de préparation culinaire selon l'une des revendications 1 à 2, **caractérisé en ce que** la cheminée (53) est tronconique.

4. Appareil électroménager de préparation culinaire selon l'une des revendications 1 à 3, **caractérisé en ce que** la protubérance (20) est tronconique.

5. Appareil électroménager de préparation culinaire selon l'une des revendications 1 à 4, **caractérisé en ce que** le récipient intermédiaire (2) forme une passoire.

6. Appareil électroménager de préparation culinaire selon l'une des revendications 1 à 5, **caractérisé en ce que** le récipient intermédiaire (2) comporte des ouvertures inférieures (22).

7. Appareil électroménager de préparation culinaire selon l'une des revendications 1 à 6, **caractérisé en ce que** le récipient intermédiaire comporte des ouvertures latérales extérieures (23).

8. Appareil électroménager de préparation culinaire selon l'une des revendications 1 à 7, **caractérisé en ce que** le récipient intermédiaire comporte des ouvertures latérales intérieures (24) ménagées sur une paroi latérale de la protubérance (20).

## Claims

1. A household electrical appliance for preparing food, said appliance including a bowl (5) presenting a bottom (50), a rotary work tool (4) arranged in the bowl (5), a drive device (6) for driving the rotary work tool (4), and a lid (3), the bowl (5) being associated with heater means (10), said household electrical appliance being **characterized in that** the bowl (5) has a chimney (53) extending upwards from the bottom (50), the chimney (53) having a top opening, the rotary work tool (4) arranged in the bowl (5) fitting over the chimney (53), an intermediate receptacle (2) being designed to be interposed between the lid (3) and the bowl (5) when the rotary work tool (4) has been removed from the bowl (5), the intermediate receptacle (2) being provided with a protuberance (20) designed to fit over the chimney (53).

2. A household electrical appliance for preparing food according to claim 1, **characterized in that** the protuberance (20) rests on the top of the chimney (53).

3. A household electrical appliance for preparing food according to claim 1 or claim 2, **characterized in that** the chimney (53) is frustoconical.

4. A household electrical appliance for preparing food according to any one of claims 1 to 3, **characterized in that** the protuberance (20) is frustoconical.

5. A household electrical appliance for preparing food according to any one of claims 1 to 4, **characterized in that** the intermediate receptacle (2) forms a colander.

6. A household electrical appliance for preparing food according to any one of claims 1 to 5, **characterized in that** the intermediate receptacle (2) is provided with bottom openings (22).

7. A household electrical appliance for preparing food according to any one of claims 1 to 6, **characterized in that** the intermediate receptacle is provided with outer side openings (23).

8. A household electrical appliance for preparing food according to any one of claims 1 to 7, **characterized in that** the intermediate receptacle is provided with inner side openings (24) formed in a side wall of the protuberance (20).

## Patentansprüche

1. Elektrohaushaltsgerät zur Nahrungszubereitung, das eine Wanne (5) mit einem Boden (50), ein in der Wanne (5) angeordnetes Drehwerkzeug (4), eine Vorrichtung (6) zum Antreiben des Drehwerkzeugs (4) und einen Deckel (3) aufweist, wobei die Wanne (5) Heizmitteln (10) zugeordnet ist, **dadurch gekennzeichnet, dass** die Wanne (5) einen Schacht (53) aufweist, der sich vom Boden (50) aus nach oben verläuft, wobei der Schacht (53) eine obere Öffnung aufweist, wobei das in der Wanne (5) angeordnete Drehwerkzeug (4) den Schacht (53) überdeckt, wobei ein Zwischenbehälter (2) dazu vorgesehen ist, zwischen dem Deckel (3) und der Wanne (5) eingesetzt zu werden, wenn das Drehwerkzeug (4) aus der Wanne (5) herausgenommen worden ist, wobei der Zwischenbehälter (2) eine Ausstülpung (20) aufweist, die dazu vorgesehen ist, den Schacht (53) zu überdecken.

2. Elektrohaushaltsgerät zur Nahrungszubereitung nach Anspruch 1, **dadurch gekennzeichnet, dass** die Ausstülpung (20) auf dem oberen Ende des Schachts (53) aufsitzt.

3. Elektrohaushaltsgerät zur Nahrungszubereitung nach einem der Ansprüche 1 bis 2, **dadurch gekennzeichnet, dass** der Schacht (53) kegelstumpfförmig ist.

4. Elektrohaushaltsgerät zur Nahrungszubereitung nach einem der Ansprüche 1 bis 3, **dadurch gekennzeichnet, dass** die Ausstülpung (20) kegelstumpfförmig ist.

5. Elektrohaushaltsgerät zur Nahrungszubereitung nach einem der Ansprüche 1 bis 4, **dadurch gekennzeichnet, dass** der Zwischenbehälter (2) einen Sieb bildet.

6. Elektrohaushaltsgerät zur Nahrungszubereitung nach einem der Ansprüche 1 bis 5, **dadurch gekennzeichnet, dass** der Zwischenbehälter (2) untere Öffnungen (22) aufweist.

7. Elektrohaushaltsgerät zur Nahrungszubereitung nach einem der Ansprüche 1 bis 6, **dadurch gekennzeichnet, dass** der Zwischenbehälter (2) äußere Seitenöffnungen (23) aufweist.

8. Elektrohaushaltsgerät zur Nahrungszubereitung nach einem der Ansprüche 1 bis 7, **dadurch gekennzeichnet, dass** der Zwischenbehälter (2) innere Seitenöffnungen (24) aufweist, die an einer Seitenwand der Ausstülpung (20) ausgebildet sind.
